(19) Europäisches Patentamt
European Patent Office
Office européen des brevets

(11) EP 3 101 086 A1

(12) EUROPEAN PATENT APPLICATION

(43) Date of publication:
07.12.2016 Bulletin 2016/49

(51) Int Cl.:
C09K 8/68 (2006.01)          C09K 8/78 (2006.01)
C09K 8/86 (2006.01)          E21B 43/26 (2006.01)

(21) Application number: 15170708.0

(22) Date of filing: 04.06.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Akzo Nobel Chemicals International
B.V.
6824 BM Arnhem (NL)

(72) Inventors:
• Nasr-El-Din, Hisham
College Station, TX Texas 77845 (US)
• He, Jia
College Station, TX Texas 77843-3116 (US)
• De Wolf, Cornelia Adriana
NL-6961 PC Eerbeek (NL)

(74) Representative: Akzo Nobel IP Department
Velperweg 76
6824 BM Arnhem (NL)

(54) **PROCESS TO TREAT CLOSED FRACTURES IN A SUBTERRANEAN FORMATION USING AN IMINODIACETIC ACID OR SALT THEREOF**

(57) The present invention relates to a process for treating natural fractures or fractures created in previous treatments that have closed at least partly in a subterranean formation comprising a step of introducing into the formation a treatment composition containing an iminodiacetic acid compound of the formula R-N-$(CH_2$-COOH$)_2$, or a salt thereof, wherein the R-N moiety can be derived from a natural amino acid COOH-CHR'-$NH_2$ that has been carboxymethylated at the nitrogen atom, or wherein the R-N moiety can be derived from an ethylenediamine $NH_2$-$(CH_2$-$CH_2$-NH$)_n$-H that has been at least partly carboxymethylated at the nitrogen atoms.

EP 3 101 086 A1

**Description**

Process to treat closed fractures in a subterranean formation using an iminodiacetic acid or salt thereof

The present invention relates to a process for treating closed fractures in subterranean formations with a treatment composition that contains an iminodiacetic acid or a salt thereof, such as preferably glutamic acid N,N-diacetic acid or a salt thereof (GLDA), N-hydroxyethyl ethylenediamine N,N',N'-triacetic acid or a salt thereof (HEDTA), aspartic acid N,N-diacetic acid or a salt thereof (ASDA) and/or methylglycine N,N diacetic acid or a salt thereof (MGDA).

Subterranean formations from which oil and/or gas and/or (hydrothermal) water can be recovered can contain several solid materials contained in porous or fractured rock formations. The naturally occurring hydrocarbons, such as oil and/or gas, are trapped by the overlying rock formations with lower permeability. The reservoirs are found using hydrocarbon exploration methods and often one of the treatments needed to withdraw the oil, water and/or gas therefrom is to improve the permeability of the formations. The rock formations can be distinguished by their major components.

One process to make formations like carbonate, shale or sandstone formations more permeable is a fracturing process using pressure high enough to hydraulically fracture the rock. One example of a fracturing process is an acidic fracturing process, wherein an acidic fluid is introduced into the formations trapping the oil, water and/or gas under a pressure that is high enough to fracture the rock, the acidic fluid meanwhile or afterwards etching the fracture surfaces so that the fracture does not fully close anymore once the pressure is released again.

WO 2012/171858 discloses the use of fluids containing GLDA, MGDA, or HEDTA in fracturing a subterranean formation, as fluids to treat the open fractures in such a way that they cannot completely close again anymore, i.e. for etching the surface of the open fractures. This document discloses the fluids to be advantageous as they do not give a softening of the surface around the factures (indicated as rock embedment strength). WO2012/171858, however, is completely silent about processes to treat subterranean formations in which the fractures have at least partly closed again after their formation.

The present invention relates to treating such closed fractures. In many rocks there are natural fracks and also after a fracturing operation fractures close again, sometimes purposively or else undesirably. Processes that can cause fracture closure include, but are not restricted to, scaling by incompatible fluids, fines migrations, workover operations and geological pressure.

The production of oil and/or gas and/or hydrothermal water is severely hindered by the closure of the fractures and treatment of the formation is required. The most environmentally friendly and cost effective way to regain the permeability of the formation would be to open up the fractures that are either naturally present or formed during previous operations. Therefore there is a need to chemically treat such fractures in subterranean rocks in a way that oil, water and/or gas will be able to flow through them again and to so produce or recover oil, water or gas from these same rocks even after closure of the fractures.

In chemically treating closed fractures, one would look for chemicals that strike the right balance between reaction with the surface of the closed fractures and radial penetration into the formation. In other words, the chemicals should react fast enough to 1) create dominant flow channels through the closed fractures and 2) penetrate far into the formation in a direction perpendicular to the wellbore, yet slow enough to 1) prevent face dissolution or wash-out in the near wellbore area and 2) prevent too many branches into the formation, which increases acid spending.

Moreover, it would be desirable to achieve a fracture conductivity over closure stress ratio as high as possible, as this means that better and stronger asperities are formed on the fracture faces allowing a better flow of oil, water and/or gas through them, but also that they will remain capable of allowing such flow even under pressure.

It has been found that when treating the formation with a composition in which iminodiacetic acid compounds such as GLDA, ASDA, MGDA and/or HEDTA are used, the right balance in reaction rate is obtained to improve the flow of oil, water and/or gas from a subterranean formation in which the fractures have at least partly closed.

Accordingly, the present invention provides a process for treating fractures that have closed at least partly in a subterranean formation comprising a step of introducing into the formation a treatment composition containing an iminodiacetic acid compound of the formula $R-N-(CH_2-COOH)_2$, or a salt thereof, wherein the R-N moiety can be derived from a natural amino acid $COOH-CHR'-NH_2$ that has been carboxymethylated at the nitrogen atom, or wherein the R-N moiety can be derived from an ethylenediamine $NH_2-(CH_2-CH_2-NH)_n-H$ that has been at least partly carboxymethylated at the nitrogen atoms. In some embodiments n is an integer of 1-5. The fractures that are treated in the process of the invention can be natural fractures or fractures that have been formed in previous treatments and that have closed completely or partly afterwards.

Preferred iminodiacetic acids or salts thereof are glutamic acid N,N-diacetic acid or a salt thereof (GLDA), methylglycine N,N diacetic acid or a salt thereof (MGDA), aspartic acid N,N-diacetic acid or a salt thereof (ASDA) and N-hydroxyethyl ethylenediamine N,N',N'-triacetic acid or a salt thereof (HEDTA).

It has now been established that without any additives iminodiacetic acids or salts thereof, such as GLDA, MGDA, ASDA and HEDTA, reach farther into closed fractures, create no face dissolution or washout and dissolve a more effective dominant flow channel through the closed fracture compared to HCl. Moreover, when using a composition containing an iminodiacetic acid or a salt thereof, such as GLDA, MGDA, HEDTA or ASDA from the present invention, for treating closed fractures in accordance with the present invention, it was found that a fracture conductivity over closure stress ratio can be achieved that is clearly higher than that obtained with HCl. In addition, it has been found that when using an iminodiacetic acid or a salt thereof, such as GLDA, MGDA, ASDA and HEDTA, in treating a formation containing closed fractures, there is a reduced need for viscosifying additives (polymers, surfactants), friction reducers, iron control, sludge control and corrosion inhibitors, and viscosity breakers.

It was found that the treatment step gives the composition a better flow through the formation and makes it possible for a larger area of the formation to be treated with the treatment composition containing an iminodiacetic acid or salt thereof, such as GLDA, MGDA, ASDA and/or HEDTA, thus enabling a higher oil and/or gas and/or hydrothermal water production from the formation. In addition, the treatment composition containing the iminodiacetic acid or salt thereof, such as GLDA, MGDA, ASDA and/or HEDTA, was found to be very suitable for recycling fracturing fluid from hydraulically fractured formations, as well as for transporting and/or dissolving particles, fines, deposits and scales from both natural and actively created fractures. For example, the treatment composition containing the iminodiacetic acid, such as GLDA, MGDA, ASDA and/or HEDTA, was found to be useful in reopening the fractures formed by a fracturing step and in addition capable of transporting any particles, fines, deposits outside the formation, while at the same time it was found to be capable of creating further channels into the formation as well as etched surfaces thereon by dissolving certain acid-soluble constituents, like carbonates, in the formation. In addition, compared to conventional acids like HCl, they give fewer undesired side-effects caused by clays that are often present in formations, especially in sandstone formations, such as the undesired blocking of just-formed fractures and/or flow channels.

In a preferred embodiment the subterranean formation is a carbonate (calcite, chalk or dolomite) or carbonate-containing, like a carbonate-containing sandstone or shale, formation.

Moreover, it was found that the treatment compositions of the invention are very suitable for desorbing the gas and/or oil from the formation and are additionally compatible to a high extent with the crude oil. For example, in contrast to strong mineral acids, like HCl, no sludge with asphaltene-rich crude is formed when the formation is treated by the compositions of the invention.

In addition, the treatment compositions of the present invention require much lower amounts of - and sometimes can even do without - certain additives, like especially antisludge additives, fluid loss additives, clay stabilizers, viscosifiers, thickeners, iron control agents, corrosion inhibitors, and corrosion inhibitor intensifiers. Especially when the treatment compositions of the present invention have a low pH, they need significantly lower amounts of these additives while having the same effectiveness.

The term treating in this application is intended to cover any treatment of the fractures that have at least partly closed in the formation with the treatment composition. It specifically covers treating the at least partly closed fractures with the treatment composition wherein the composition is allowed to contact the surfaces of these fractures, to change at least part of the surfaces in these closed fractures, to create an inhomogeneous surface, to remove small particles, scales and fines from the fractures. The treatment is done to achieve at least one of (i) an increased permeability or conductivity, (ii) the removal of small particles and (iii) the removal of inorganic scale. These will so ultimately enhance the well performance and enable an increased production of oil and/or gas and/or hydrothermal water from the previously actively or naturally fractured formation. At the same time, while treating the at least partly closed fractures, the treatment composition may in addition act in cleaning of the wellbore and descaling of the oil/gas/water production well and production equipment.

It can be noted that WO 2008/015464 discloses a fluid that may contain a chelating agent and/or a scale control agent, mainly to remediate surfactant gel damage, but also to be used in many other applications, such as to remediate a formation that has been previously treated with, for example, a fracturing fluid, or as an acidizing treatment. The chelating agents may be chosen from a group of several compounds, with EDTA the only chelating agent being exemplified and this only to demonstrate a permeability regaining effect in relation to an oleamidopropyl betaine viscoelastic surfactant. Accordingly, the document does not clearly and unambiguously disclose the use of a composition containing an iminodiacetic acid or salt thereof such as GLDA, MGDA, ASDA or HEDTA as a treatment composition for closed fractures, nor the advantageous effects of the present invention.

The amounts of components such as chelating agent in wt% or ppm are based on the total weight of the fluid or composition in which they are present; the amounts in vol% are on the basis of the total volume of the composition.

The iminodiacetic acid or salt thereof, such as GLDA, MGDA, ASDA and/or HEDTA, is preferably used in an amount of between 5 and 40 wt%, more preferably between 10 and 30 wt%, even more preferably between 10 and 20 wt%, on the basis of the total weight of the treatment composition. These highly concentrated solutions are suitable because when you perform a treatment to reopen a closed fracture, the surfaces need to be etched at such a rate and quantity that the right balance is achieved between creating dominant flow channels and penetrating further into the formation away from the wellbore. Another benefit of a highly concentrated solution is that because of the higher viscosity of the more concentrated solutions, a lower leak-off takes place.

The preferred iminodiacetic acids or salts thereof are selected from the group of GLDA, HEDTA, ASDA and MGDA. Because preparing highly concentrated fluids of GLDA with many other constituents is easier than in the case of MGDA, ASDA and HEDTA over a broad pH range, GLDA is preferred. As can be read in WO 2009/086954, GLDA is much better soluble in many aqueous and acidic solutions.

Salts of iminodiacetic acids that can be used are their alkali metal, alkaline earth metal, or ammonium full and partial salts. Also mixed salts containing different cations can be used. Preferably, the sodium, potassium, lithium, cesium and ammonium full or partial salts of GLDA, ASDA, MGDA and/or HEDTA are used.

In a preferred embodiment GLDA is used, as this material gives clearly the best results.

In another preferred embodiment the process of the present invention contains one or more soaking steps. A soaking step is a step wherein the formation is contacted with the above treatment composition while reducing the flow rate with which the composition is moved through the formation, such to allow the composition time to react with the components in the formation. Or to phrase it differently, a process of treating a formation comprising a soaking step means that the treatment composition is introduced into the formation, after which, when the composition flows into the formation, during the soaking step the flow rate of the composition is purposively decreased for a period of time, and wherein next this flow rate is again increased, the latter increased flow being in either the same original direction or another direction (giving a so-called reverse flow). Purposively means that the flow rate of the treatment composition is actively changed, for example, by using an apparatus such as a pump, gas lift, or valve, and does not include variations in flow rate locally in a formation due to circumstances in the formation, like a varying permeability.

The compositions used in the process of the invention can be fluids, emulsified, foamed, or viscosified compositions.

Emulsified composition is defined in this application as a composition that is a mixture of a dispersed phase containing the iminodiacetic acid or salt thereof in a continuous phase, wherein the emulsified iminodiacetic acid or salt thereof does not dissolve in the continuous phase but will be dispersed in the continuous phase in small (aqueous) droplets. The emulsifier (also called: emulsifying agent) acts as a barrier between the dispersed phase and the continuous phase.

Viscosified composition is defined in this application as a composition that has a higher viscosity than the same composition without a viscosifying agent when using an AR2000 rheometer from TA instruments using a cone and plate geometry at 20°C or another relevant temperature as specified herein, wherein the cone is stainless steel with a 40 mm diameter and a 4° angle (SST 40 mm 4°) and heating is done using a Peltier element. The test is applied by varying the shear rate from 0.1 to 1000 s$^{-1}$. Preferably, the viscosity of the viscosified composition is higher than 10 mPa.s, more preferably higher than 50 mPa.s at a shear rate of 100 s$^{-1}$.

When the composition is a foamed composition, besides the iminodiacetic acid or salt thereof and a solvent or liquid (often water) it contains a foaming agent and a gas.

When the composition is an emulsified composition, it contains a dispersed phase emulsified in a continuous phase containing the iminodiacetic acid or salt thereof and at least 0.01 vol% on total volume of the composition of an emulsifying agent. The emulsifying agent is preferably present in the emulsified composition in an amount of between 0.01 and 10 vol%, more preferably between 0.5 and 3.0 vol%, even more preferably between 1 and 2 vol%, on total volume of the composition.

The continuous phase is generally based on a hydrocarbon liquid in which the iminodiacetic acid does not dissolve, which in one embodiment is chosen from diesel, light crude oil, xylene, gasoline, toluene, kerosene, other aromatics, refined hydrocarbons, and mixtures thereof. In preferred embodiments, the continuous phase is chosen from the group of xylene, diesel, light crude oil or mixtures thereof. Xylene is preferred if an asphaltene is present in the composition.

The gas is preferably present in the foamed composition in an amount of between 50 and 99 vol%, preferably between 50 and 80 vol%, even more preferably 60-70 vol%, on total foam volume.

The foaming agent in one embodiment is a surfactant. Preferably, the foaming agent is a water-soluble surfactant, as the foams of the invention are preferably water-based. Water-soluble means for this invention: soluble in an amount of at least 2 g/l of water.

The foaming agent in one embodiment is used in an amount of between 10 ppm and 200,000 ppm on the basis of the total weight of the foam, preferably between 10 ppm and 100,000 ppm, even more preferably 100 and 50,000 ppm, most preferably between 100 and 10,000 ppm.

The gas in one embodiment is selected from the group of $N_2$, CO, $CO_2$, natural gas, oxygen or mixtures thereof, like air. Preferably, $N_2$, air, or natural gas is used. When the composition is a viscosified composition, besides the iminodiacetic acid and the solvent or liquid (often water) it contains a viscosifying agent (also called viscosifier).

The viscosifying agent is preferably present in an amount of between 0.01 and 3 wt%, more preferably between 0.01 and 2 wt%, even more preferably between 0.05 and 1.5 wt%, on total weight of the viscosified composition.

The treatment compositions of the invention are preferably aqueous fluids, i.e. they preferably contain water as a solvent for the other ingredients, wherein the water can be, e.g., fresh water, aquifer water, produced water, seawater or any combinations of these waters, though other solvents may be added as well, as also further explained below.

The pH of the treatment compositions of the invention can range from 1 to 14. Preferably, however, it is between 1 and 6, more preferably between 2 and 5.

The process of the invention is preferably performed at a pressure between atmospheric pressure and fracture pressure, wherein fracture pressure is defined as the pressure above which injection of the compositions will cause the formation to fracture hydraulically. A person skilled in the art will understand that the fracture pressure depends on parameters such as type, depth of the formation, and downhole stresses, and can be different for any reservoir.

The treatment composition may contain other additives that improve the functionality of the stimulation action and minimize the risk of damage as a consequence of the said treatment, as is known to anyone skilled in the art.

The treatment composition of the invention may in addition contain, or be used before or after compositions containing one or more of the group of anti-sludge agents, surfactants, corrosion inhibitors, mutual solvents, corrosion inhibitor intensifiers, wetting agents, viscosifiers, diverting agents, oxygen scavengers, fluid loss additives, friction reducers, clay stabilizers, rheology modifiers, scale inhibitors, breakers, salts, brines, pH control additives such as further acids and/or bases, bactericides/biocides, particulates, crosslinkers, relative permeability modifiers, sulfide scavengers, fibers, nanoparticles, combinations thereof, or the like.

The mutual solvent is a chemical liquid additive that is soluble in oil, water, acids (often HCl based), and other well treatment fluids, (see also http://www.glossary.oilfield.slb.com). Mutual solvents are routinely used in a range of applications, controlling the wettability of contact surfaces before, during and/or after a treatment, and preventing or breaking emulsions. Mutual solvents are used, as insoluble formation fines pick up organic film from crude oil. These particles are partially oil-wet and partially water-wet. This causes them to collect materials at any oil-water interface, which can stabilize various oil-water emulsions. Mutual solvents remove organic films leaving them water-wet, thus emulsions and particle plugging are eliminated. If a mutual solvent is employed, it is preferably selected from the group which includes, but is not limited to, lower alcohols such as methanol, ethanol, 1-propanol, 2-propanol, and the like; glycols such as ethylene glycol, propylene glycol, diethylene glycol, dipropylene glycol, polyethylene glycol, polypropylene glycol, polyethylene glycol-polyethylene glycol block copolymers, and the like; and glycol ethers such as 2-methoxyethanol, diethylene glycol monomethyl ether, and the like; substantially water/oil-soluble esters, such as one or more C2-esters through C10-esters, and substantially water/oil-soluble ketones, such as one or more C2-C10 ketones, wherein substantially soluble means soluble in at least 1 g per liter, preferably 10 g per liter, more preferably 100 g per liter. The mutual solvent is preferably present in an amount of 1 to 50 wt% on total composition.

A preferred water/oil-soluble ketone is methyl ethyl ketone. The ketone solvent may be present in an amount from 40 wt% to about 50 wt%.

A preferred substantially water/oil-soluble alcohol is methanol. The substantially water-soluble alcohol may be present in an amount within the range of about 20 wt% to about 30 wt%. A preferred substantially water/oil-soluble ester is methyl acetate and the substantially water/oil-soluble ester may be present in an amount within the range of about 20 wt% to about 30 wt%.

A more preferred mutual solvent is ethylene glycol monobutyl ether, generally known as EGMBE. The amount of glycol solvent in the solution is preferably about 1 wt% to about 10 wt%, more preferably between 3 and 5 wt%, each amount being based upon the total weight of the solvent in the composition.

The surfactant can be any surfactant known in the art and includes anionic, cationic, amphoteric, including zwitterionic, and nonionic surfactants. The choice of surfactant is initially determined by the nature of the rock formation around the well. The application of cationic surfactants is best limited in the case of sandstone, while in the case of carbonate rock, anionic surfactants are not preferred. Hence, the surfactant (mixture) is predominantly anionic in nature when the formation is a sandstone formation. When the formation is a carbonate formation, the surfactant (mixture) is preferably predominantly nonionic or cationic in nature, even more preferably predominantly cationic. It should be noted that surfactants can also be used to achieve water-wetting effects in a treatment process as well as as foaming agent, viscosifying agent or emulsifying agent.

The nonionic surfactant of the present composition is preferably selected from the group consisting of alkanolamides, alkoxylated alcohols, alkoxylated amines, amine oxides, alkoxylated amides, alkoxylated fatty acids, alkoxylated fatty amines, alkoxylated alkyl amines (e.g., cocoalkyl amine ethoxylate), alkyl phenyl polyethoxylates, lecithin, hydroxylated lecithin, fatty acid esters, glycerol esters and their ethoxylates, glycol esters and their ethoxylates, esters of propylene glycol, sorbitan, ethoxylated sorbitan, polyglycosides, and the like, and mixtures thereof. Alkoxylated alcohols, preferably ethoxylated alcohols, optionally in combination with (alkyl) polyglycosides, are the most preferred nonionic surfactants.

The anionic surfactants may comprise any number of different compounds, including alkyl sulfates, alkyl sulfonates, alkylbenzene sulfonates, alkyl phosphates, alkyl phosphonates, alkyl sulfosuccinates.

The amphoteric surfactants include hydrolyzed keratin, taurates, sultaines, phosphatidyl cholines, betaines, modified betaines, alkylamidobetaines (e.g., cocoamidopropyl betaine).

The cationic surfactants include alkyl amines, alkyl dimethylamines, alkyl trimethylamines (quaternary amines), alkyl diethanolamines, dialkyl amines, dialkyl dimethylamines, and less common classes based on phosphonium, sulfonium. In preferred embodiments, the cationic surfactants may comprise quaternary ammonium compounds (e.g., trimethyl tallow ammonium chloride, trimethyl coco ammonium chloride), derivatives thereof, and combinations thereof.

Suitable surfactants may be used in a liquid or solid form, like a powder, granule or particulate form.

Where used, the surfactants may be present in the composition in an amount sufficient to prevent incompatibility with formation fluids, other treatment fluids, or wellbore fluids at reservoir temperature.

In an embodiment where liquid surfactants are used, the surfactants are generally present in an amount in the range of from about 0.01% to about 5.0% by volume of the composition.

In one embodiment, the liquid surfactants are present in an amount in the range of from about 0.1% to about 2.0% by volume of the composition, more preferably between 0.1 and 1 vol%.

In embodiments where powdered surfactants are used, the surfactants may be present in an amount in the range of from about 0.001% to about 0.5% by weight of the composition.

Examples of surfactants that are also foaming agents that may be utilized to foam and stabilize the treatment compositions of this invention include, but are not limited to, betaines, amine oxides, methyl ester sulfonates, alkylamidobetaines such as cocoamidopropyl betaine, alpha-olefin sulfonate, trimethyl tallow ammonium chloride, C8 to C22 alkyl ethoxylate sulfate, and trimethyl coco ammonium chloride.

The foaming agent, if used, is normally used in an amount of between 10 and 200,000 ppm based on the total weight of the composition, preferably between 100 and 10,000 ppm.

When the composition is a foamed composition, foam formation can be achieved along several routes. In one embodiment, a suitable foam is obtained by including a mixture of surfactants as foaming agents in the solution containing the iminodiacetic acid or salt thereof. Suitable surfactants may be anionic, cationic, amphoteric or nonionic in nature, or their mixtures. The person skilled in the art is fully aware that in the case of surfactants having opposite charges, a non-stoichiometric ratio must be chosen. Preferably, the molar ratio is higher than 3 to 1. More preferably, it is higher than 5:1 and most preferably, it is higher than 10:1. It is also preferred that the surfactant mixture is soluble in water (i.e. in an amount of at least 2 g/l water, preferably at least 10 g/l of water). It is more preferred that the surfactant mixture is soluble in the aqueous system containing up to 5% on total weight of a iminodiacetic acid or salt thereof. Suitable surfactant mixtures may be mixtures of surfactants which are all soluble in the described solutions. However, surfactant mixtures may also contain one or more (co-)surfactants which are insoluble in the described solutions. It is known to the person skilled in the art that the portion of insoluble surfactants is bound to limits. When expressed in weight ratios, the preferred ratio of insoluble to soluble surfactant is less than 2. More preferably, it is less than 1 and most preferably, it is less than 1/3 (one third).

In another embodiment, the compositions of the present invention may comprise a foam extender, as for example disclosed in WO 2007/020592.

The antisludge agent is an agent that helps to prevent or reduce the formation of sludge, i.e. the thick, viscous emulsion containing oil, water, sediment and residue that forms because of the incompatibility of certain native, usually asphaltene-rich crude oils and strong inorganic acids used in well treatments.

Anti-sludge agents stabilize the acid-oil emulsion and include alkyl phenols, fatty acids, and anionic surfactants. Frequently used as the surfactant is a blend of a sulfonic acid derivative and a dispersing surfactant in a solvent. Such a blend generally has dodecyl benzene sulfonic acid (DDBSA) or a salt thereof as the major dispersant, i.e. anti-sludge, component.

Corrosion inhibitors may be selected from the group of amine and quaternary ammonium compounds and sulfur compounds. Examples are diethyl thiourea (DETU), which is suitable up to 185°F (about 85°C), alkyl pyridinium or quinolinium salt, such as dodecyl pyridinium bromide (DDPB), and sulfur compounds, such as thiourea or ammonium thiocyanate, which are suitable for the range 203-302°F (about 95-150°C), benzotriazole (BZT), benzimidazole (BZI), dibutyl thiourea, a proprietary inhibitor called TIA and alkyl pyridines.

In general, the most successful inhibitor formulations for organic acids and chelating agents contain amines, reduced sulfur compounds or combinations of a nitrogen compound (amines, quats or polyfunctional compounds) and a sulfur compound. The amount of corrosion inhibitor is preferably less than 2 volume %, more preferably between 0.01 and 1 volume %, even more preferably between 0.1 and 1 volume % on total composition volume.

One or more corrosion inhibitor intensifiers, chemicals that assist the corrosion inhibitor in slowing corrosion in harsh conditions, may be added, such as for example formic acid, potassium iodide, antimony chloride, or copper iodide.

Examples of suitable organic salts include, but are not limited to, aromatic sulfonates and carboxylates (such as p-toluene sulfonate and naphthalene sulfonate), hydroxynaphthalene carboxylates, salicylate, phthalate, chlorobenzoic acid, phthalic acid, 5-hydroxy-1-naphthoic acid, 6-hydroxy-1-naphthoic acid, 7-hydroxy-1-naphthoic acid, 1-hydroxy-2-naphthoic acid, 3-hydroxy-2-naphthoic acid, 5-hydroxy-2-naphthoic acid, 7-hydroxy-2-naphthoic acid, 1,3-dihydroxy-2-naphthoic acid, 3,4-dichlorobenzoate, trimethyl ammonium hydrochloride and tetramethyl ammonium chloride.

Examples of suitable inorganic salts include water-soluble potassium, sodium, and ammonium halide salts (such as potassium chloride and ammonium chloride), calcium chloride, calcium bromide, magnesium chloride, sodium formate, potassium formate, cesium formate, and zinc halide salts. A mixture of salts may also be used, but it should be noted that preferably chloride salts are mixed with chloride salts, bromide salts with bromide salts, and formate salts with formate salts.

Wetting agents that may be suitable for use in this invention include crude tall oil, oxidized crude tall oil, surfactants, organic phosphate esters, modified imidazolines and amidoamines, alkyl aromatic sulfates and sulfonates, and the like, and combinations or derivatives of these and similar such compounds that should be well known to one of skill in the art.

Viscosifiers, chemicals that increase the viscosity of a composition, may be added. The viscosifiers include chemical species which are soluble, at least partially soluble and/or insoluble in the iminodiacetic acid or salt thereof-containing starting fluid. The viscosifiers may also include various insoluble or partially soluble organic and/or inorganic fibers and/or particulates, e.g., dispersed clay, dispersed minerals, and the like, which are known in the art to increase viscosity. Suitable viscosifiers further include various organic and/or inorganic polymeric species including polymer viscosifying agents, especially metal-crosslinked polymers. Suitable polymers for making the metal-crosslinked polymer viscosifiers include, for example, polysaccharides, e.g., substituted galactomannans, such as guar gums, high-molecular weight polysaccharides composed of mannose and galactose sugars, or guar derivatives such as hydroxypropyl guar (HPG), carboxymethyl hydroxypropyl guar (CMHPG), and carboxymethyl guar (CMG), hydrophobically modified guars, guar-containing compounds, and synthetic polymers. Crosslinking agents which include boron, titanium, zirconium and/or aluminium complexes are preferably used to increase the effective molecular weight of the polymers and make them better suited for use as viscosity-increasing agents, especially in high-temperature wells. Other suitable classes of water-soluble polymers effective as viscosifiers include polyvinyl alcohols at various levels of hydrolysis, polyvinyl polymers, polymethacrylamides, cellulose ethers, lignosulfonates, and ammonium, alkali metal, and alkaline earth salts thereof, polyethylene imines, polydiallyl dimethyl ammonium chloride, polyamines like copolymers of dimethylamine and epichlorohydrin, copolymers of acrylamide and cationic monomers, like diallyl dimethyl ammonium chloride (DADMAC) or acryloyloxyethyl trimethyl ammonium chloride, copolymers of acrylamide containing anionic as well as cationic groups. More specific examples of other typical water-soluble polymers are acrylic acid-acrylamide copolymers, acrylic acid-methacrylamide copolymers, polyacrylamides, partially hydrolyzed polyacrylamides, partially hydrolyzed polymethacrylamides, polyvinyl alcohol, polyalkylene oxides, other galactomannans, heteropolysaccharides obtained by the fermentation of starch-derived sugar and ammonium and alkali metal salts thereof. Cellulose derivatives, including hydroxyethyl cellulose (HEC), hydroxypropyl cellulose (HPC), carboxymethylhydroxyethyl cellulose (CMHEC) and/or carboxymethyl cellulose (CMC), with or without crosslinkers, xanthan, diutan, and scleroglucan are also preferred.

Still other viscosifiers include clay-based viscosifiers, platy clays, like bentonites, hectorites or laponites, and small fibrous clays such as the polygorskites (attapulgite and sepiolite). When using polymer-containing viscosifiers as further viscosifiers, the viscosifiers may be used in an amount of up to 5% by weight of the compositions of the invention.

When the composition of the invention is an emulsified composition, the emulsifier can be a nonionic, anionic, cationic or amphoteric surfactant, polymeric surfactant or pickering emulsifier. Pickering emulsifiers are emulsifiers that stabilize an emulsion by relying on the effect of solid particles (for example colloidal silica) that adsorb onto the interface between the two phases.

It is common to express the property of a surfactant mixture by its hydrophilic-lipophilic balance, the so-called HLB. The HLB of non-ionic surfactants can be simply calculated by applying Griffin's formula:

$$\text{HLB} = 20 \times (\text{molar mass of the hydrophilic portion of the molecule})/(\text{molar mass of the molecule})$$

Example:

Decylalcohol ethoxylate (8EO): $C_{10}$-$EO_8$
Hydrophobic part: $CH_3(CH_2)_9$-$OH$ molar mass = 158
Hydrophilic part: $[CH_2CH_2O]_8$ molar mass = 352
HLB for $C_{10}$-$EO_8$ is $20 \times 352/(352 + 158) = 13.8$

The HLB of surfactants having ionic portions is calculated by Davis's formula rather than Griffin's:

$$\text{HLB} = 7 + \Sigma (\text{Hydrophilic group contributions}) - \Sigma (\text{Hydrophobic group contributions}),$$ in which case the following tables need to be used in finding the increments, see Tables A-D in Technical Information Surface Chemistry: HLB & Emulsification, link: http://www.scribd.com/doc/56449546/HLB-Emulsification.

Table A has been retrieved:

| Table A: anionic hydrophilic group contributions | | | |
|---|---|---|---|
| hydrophilic group contribution | HLB | hydrophilic group contribution | HLB |
| - COO- Na$^+$ | 19.1 | -SO$_3$- Na$^+$ | 20.7 |
| | | -O-SO$_3$-Na$^+$ | 20.8 |

Example:

Tetradecyl ammonium chloride: C$_{14}$-N(CH$_3$)$_3$$^+$Cl$^-$
Group contributions of the hydrophobic groups:

-CH3: 1x0.475
-CH2-: 13x0.475

Group contributions of the hydrophilic groups:

-N(CH$_3$)$_3$$^+$Cl$^-$ 22.0
HLB for C$_{14}$-N(CH$_3$)$_3$$^+$Cl$^-$ is 7+22.0-(14x0.475) = 22.4

The HLB of surfactant mixtures is simply the weight average of the HLBs of the individual surfactant types.
In one embodiment the HLB of the emulsifying agent is about 20 or below; alternatively, the HLB is about 10 or below; and in another embodiment it is about 8 or below.
In another embodiment, a suitable emulsion is obtained by including polymeric surfactants as emulsifiers. Examples of polymeric surfactants are partially hydrolyzed polyvinyl acetate, partially hydrolyzed modified polyvinyl acetate, block or co-polymers of alkenes such as polyethylene, polypropylene, polybutylene or polypentylene, proteins, and partially hydrolyzed polyvinyl acetate, polyacrylate and derivatives of polyacrylates, polyvinyl pyrrolidone and derivatives. The additional application of further surfactants to the polymeric surfactant is beneficial to the emulsion quality or lifetime.
Examples of emulsifiers include, but are not limited to, quaternary ammonium compounds (e.g., trimethyl tallow ammonium chloride, trimethyl coco ammonium chloride, dimethyl dicoco ammonium chloride, etc.), derivatives thereof and combinations thereof, low HLB surfactants or oil-soluble surfactants. More specific suitable emulsifiers include, but are not necessarily limited to, polysorbates, alkyl sulfosuccinates, alkyl phenols, ethoxylated alkyl phenols, alkyl benzene sulfonates, fatty acids, ethoxylated fatty acids, propoxylated fatty acids, fatty acid salts, tall oils, castor oils, triglycerides, ethoxylated triglycerides, alkyl glucosides and mixtures and derivatized fatty acids such as those disclosed in US 6,849,581. Suitable polysorbates include, but are not necessarily limited to, sorbitan monolaurate, sorbitan monopalmitate, sorbitan monostearate, sorbitan monooleate, sorbitan monodecanoate, sorbitan monooctadecanoate, sorbitan trioleate and the like and ethoxylated derivatives thereof. For instance, emulsifiers may have up to 20 ethoxy groups thereon. Suitable emulsifiers include stearyl alcohol, lecithin, fatty acid amines, ethoxylated fatty acid amines and mixtures thereof. In some embodiments, more than one emulsifier may be used. Preferably, the emulsifier is cationic, such as an emulsifier that contains quaternary ammonium group-containing components.
The brine chosen should be compatible with the formation, stabilize the clays and should have a sufficient density to provide the appropriate degree of well control. Salt may also be included to increase the viscosity of the composition and stabilize it, particularly at temperatures above 180°F (about 82°C).
Additional salts may be added to a water source, e.g., to provide a brine, and a resulting treatment composition, in order to have a desired density.
The amount of salt to be added should be the amount necessary for formation compatibility, such as the amount necessary for the stability of clay minerals, taking into consideration the crystallization temperature of the brine, e.g., the temperature at which the salt precipitates from the brine as the temperature drops.
Examples of suitable brines, aqueous solutions containing more dissolved inorganic salt than typical seawater, include calcium bromide brines, zinc bromide brines, calcium chloride brines, sodium chloride brines, sodium bromide brines, potassium bromide brines, potassium chloride brines, sodium nitrate brines, sodium formate brines, potassium formate brines, cesium formate brines, magnesium chloride brines, sodium sulfate, potassium nitrate, and the like. A mixture of salts may also be used in the brines, but it should be noted that preferably chloride salts are mixed with chloride salts, bromide salts with bromide salts, and formate salts with formate salts.
Preferred suitable brines may include seawater and/or formation brines.
Examples of suitable pH control additives which may optionally be included in the treatment compositions of the present invention are acid compositions and/or bases.

A pH control additive may be necessary to maintain the pH of the treatment composition at a desired level, e.g., to improve the effectiveness of certain breakers and to reduce corrosion on any metal present in the wellbore or formation, etc.

One of ordinary skill in the art will, with the benefit of this disclosure, be able to recognize a suitable pH for a particular application.

In one embodiment, the pH control additive may be an acid composition.

Examples of suitable acid compositions may comprise an acid, an acid-generating compound, and combinations thereof.

Any known acid may be suitable for use with the treatment compositions of the present invention.

Examples of acids that may be suitable for use in the present invention include, but are not limited to, organic acids (e.g., formic acids, acetic acids, carbonic acids, citric acids, glycolic acids, lactic acids, ethylene diamine tetraacetic acid (EDTA) and the like), inorganic acids (e.g., hydrochloric acid, hydrofluoric acid, phosphonic acid, p-toluene sulfonic acid and the like), and combinations thereof. Preferred acids are HCl and organic acids.

Examples of acid-generating compounds that may be suitable for use in the present invention include, but are not limited to, esters, aliphatic polyesters, ortho esters, which may also be known as ortho ethers, poly(ortho esters), which may also be known as poly(ortho ethers), poly(lactides), poly(glycolides), poly(epsilon-caprolactones), poly(hydroxybutyrates), poly(anhydrides), or copolymers thereof.

Derivatives and combinations also may be suitable.

The term "copolymer" as used herein is not limited to the combination of two polymers, but includes any combination of polymers, e.g., terpolymers and the like.

Other suitable acid-generating compounds include: esters including, but not limited to, ethylene glycol monoformate, ethylene glycol diformate, diethylene glycol diformate, glyceryl monoformate, glyceryl diformate, glyceryl triformate, methylene glycol diformate and formate esters of pentaerythritol.

The pH control additive also may comprise a base to elevate the pH of the composition. Generally, a base may be used to elevate the pH of the mixture to greater than or equal to about 7. Having the pH level at or above 7 may have a positive effect on a chosen breaker being used and may also inhibit the corrosion of any metals present in the wellbore or formation, such as tubing, screens, etc.

In addition, having a pH greater than 7 may also impart greater stability to the viscosity of the treatment composition, thereby enhancing the length of time that viscosity can be maintained. This could be beneficial in certain uses, such as in longer-term well control and in diverting. Any known base that is compatible with the gelling agents of the present invention can be used in the compositions of the present invention.

Examples of suitable bases include, but are not limited to, sodium hydroxide, potassium carbonate, potassium hydroxide, sodium carbonate, and sodium bicarbonate. One of ordinary skill in the art will, with the benefit of this disclosure, recognize the suitable bases that may be used to achieve a desired pH elevation.

In some embodiments, the treatment composition may optionally comprise a further iminodiacetic acid or salt thereof. When added to the treatment compositions of the present invention, the iminodiacetic acid or salt thereof may chelate any dissolved iron (or other divalent or trivalent cation) that may be present in the aqueous fluid and prevent any undesired reactions being caused. Such iminodiacetic acid or salt thereof may e.g. prevent such ions from crosslinking the gelling agent molecules.

Such crosslinking may be problematic because, *inter alia,* it may cause filtration problems, injection problems, and/or cause permeability problems once more. Any suitable iminodiacetic acid or salt thereof or other chelating agent may be used with the present invention.

Examples of suitable iminodiacetic acids or chelating agents include, but are not limited to, citric acid, nitrilotriacetic acid ("NTA"), any form of ethylene diamine tetraacetic acid (EDTA), diethylene triamine pentaacetic acid (DTPA), propylene diamine tetraacetic acid (PDTA), ethylene diamine-N,N"-di(hydroxyphenylacetic) acid (EDDHA), ethylene diamine-N,N"-di-(hydroxy-methylphenyl acetic acid (EDDHMA), ethanol diglycine (EDG), trans-1,2-cyclohexylene dinitrilotetraacetic acid (CDTA), glucoheptonic acid, gluconic acid, sodium citrate, phosphonic acid, salts thereof and the like.

In some embodiments, the chelating agent may be a sodium, potassium or ammonium salt.

Generally, the chelating agent may be present in an amount sufficient to prevent undesired side effects of divalent or trivalent cations that may be present, and thus also functions as a scale inhibitor.

One of ordinary skill in the art will, with the benefit of this disclosure, be able to determine the proper concentration of a chelating agent for a particular application.

In some embodiments, the compositions of the present invention may contain bactericides or biocides, *inter alia,* to protect the subterranean formation as well as the composition from attack by bacteria. Such attacks can be problematic because they may lower the viscosity of the composition, resulting in poorer performance, such as poorer sand suspension properties, for example.

Any bactericides known in the art are suitable. Biocides and bactericides that protect against bacteria that may attack GLDA, MGDA, ASDA or HEDTA, or sulfates are preferred.

An artisan of ordinary skill will, with the benefit of this disclosure, be able to identify a suitable bactericide and the proper concentration of such bactericide for a given application.

Examples of suitable bactericides and/or biocides include, but are not limited to, phenoxyethanol, ethylhexyl glycerine, benzyl alcohol, methyl chloroisothiazolinone, methyl isothiazolinone, methyl paraben, ethyl paraben, propylene glycol, bronopol, benzoic acid, imidazolinidyl urea, a 2,2-dibromo-3-nitrilopropionamide and a 2-bromo-2-nitro-1,3-propane diol. In one embodiment, the bactericides are present in the composition in an amount in the range of from about 0.001% to about 1.0% by weight of the composition.

Compositions of the present invention also may comprise breakers, i.e. materials capable of reducing the viscosity of the composition at a desired time.

Examples of such suitable breakers for compositions of the present invention include, but are not limited to, oxidizing agents such as sodium chlorites, sodium bromate, hypochlorites, perborate, persulfates and peroxides, including organic peroxides.

Other suitable breakers include, but are not limited to, suitable acids and peroxide breakers, triethanol amine, as well as enzymes that may be effective in breaking. The breakers can be used as such or encapsulated.

Examples of suitable acids may include, but are not limited to, hydrochloric acid, hydrofluoric acid, formic acid, acetic acid, citric acid, lactic acid, glycolic acid, etc., and combinations of these acids.

A breaker may be included in a treatment composition of the present invention in an amount and form sufficient to achieve the desired viscosity reduction at a desired time.

The breaker may be formulated to provide a delayed break, if desired.

The compositions of the present invention also may comprise suitable fluid loss additives, i.e. chemical additives used to control the loss of fluid to the formation through filtration. In almost any operation, loss of fluid to the reservoir formation carries a high risk of permeability damage.

Such fluid loss additives can be particularly useful in combination with a composition of the present invention to seal parts of the formation against invasion of the composition, allowing the composition of the present invention to target mainly the closed acid fractures. Any fluid loss agent that is compatible with the compositions of the present invention is suitable for use in the present invention. Examples include, but are not limited to, starches, silica flour, gas bubbles (energized fluid or foam), benzoic acid, soaps, resin particulates, relative permeability modifiers, degradable gel particulates, diesel or other hydrocarbons dispersed in fluid, and other immiscible fluids. Another example of a suitable fluid loss additive is one that comprises a degradable material.

Suitable examples of degradable materials include polysaccharides such as dextran or cellulose; chitins; chitosans; proteins; aliphatic polyesters; poly(lactides); poly(glycolides); poly(glycolide-co-lactides); poly(epsilon-caprolactones); poly(3-hydroxybutyrates); poly(3-hydroxybutyrate-co-hydroxyvalerates); poly(anhydrides); aliphatic poly(carbonates); poly(ortho esters); poly(amino acids); poly(ethylene oxides); poly(phosphazenes); derivatives thereof; or combinations thereof.

In some embodiments, a fluid loss additive may be included in an amount of about 5 to about 2,000 lbs/Mgal (about 600 to about 240,000 g/Mliter) of the composition.

In some embodiments, the fluid loss additive may be included in an amount from about 10 to about 50 lbs/Mgal (about 1,200 to about 6,000 g/Mliter) of the composition.

In certain embodiments, a stabilizer may optionally be included in the compositions of the present invention. A stabilizer is a chemical that lengthens the functional lifetime of the treatment composition. It may be particularly advantageous to include a stabilizer if a chosen composition is experiencing viscosity degradation.

One example of a situation where a stabilizer might be beneficial is where the BHT (bottom hole temperature) of the wellbore is sufficient to break the composition by itself without the use of a breaker. Suitable stabilizers include, but are not limited to, sodium thiosulfate, methanol, and salts such as formate salts and potassium or sodium chloride.

Such stabilizers may be useful when the compositions of the present invention are utilized in a subterranean formation having a temperature above about 200°F (about 93°C). If included, a stabilizer may be added in an amount of from about 1 to about 50 lbs/Mgal (about 120 to about 6,000 g/Mliter) of composition.

Scale inhibitors may be added to the compositions of the present invention, for example, when such compositions are not particularly compatible with the formation waters in the formation in which they are used.

These scale inhibitors may include water-soluble organic molecules with carboxylic acid, aspartic acid, maleic acids, sulfonic acids, phosphonic acid, and phosphate ester groups including copolymers, ter-polymers, grafted copolymers and derivatives thereof.

Examples of such compounds include aliphatic phosphonic acids such as diethylene triamine penta (methylene phosphonate) and polymeric species such as polyvinyl sulfonate.

The scale inhibitor may be in the form of the free acid but is preferably in the form of mono- and polyvalent cation salts such as Na, K, Al, Fe, Ca, Mg, $NH_4$. Any scale inhibitor that is compatible with the composition in which it will be used is suitable for use in the present invention.

Suitable amounts of scale inhibitors that may be included in the compositions of the present invention may range from about 0.05 to 100 gallons per about 1,000 gallons (i.e. 0.05 to 100 liters per 1,000 liters) of the composition.

Any particulates such as proppant, gravel that are commonly used in subterranean operations in sandstone formations (e.g., sand, gravel, bauxite, ceramic materials, glass materials, wood, plant and vegetable matter, nut hulls, walnut hulls, cotton seed hulls, cement, fly ash, fibrous materials, composite particulates, hollow spheres and/or porous proppant), as well as any particulates such as fibers that are commonly used in subterranean operations in carbonate formations, may be used in the present invention, as may polymeric materials, such as polyglycolic acids and polylactic acids.

It should be understood that the term "particulate" as used in this disclosure includes all known shapes of materials including substantially spherical materials, oblong, fiber-like, ellipsoid, rod-like, polygonal materials (such as cubic materials), mixtures thereof, derivatives thereof, and the like.

In some embodiments, coated particulates may be suitable for use in the treatment compositions of the present invention. It should be noted that many particulates also act as diverting agents. Further diverting agents are viscoelastic surfactants and in-situ gelled fluids.

Oxygen scavengers, chemicals that react with dissolved oxygen ($O_2$) to reduce corrosion, may be needed to enhance the thermal stability of the iminodiacetic acid compound. Examples thereof are sulfites and ethorbates. Especially high temperature applications may benefit from the presence of an oxygen scavenger in an amount of less than about 2 volume % of the solution.

Friction reducers can be added in an amount of up to 0.2 vol%. Suitable examples are viscoelastic surfactants and enlarged molecular weight polymers.

Crosslinkers can be chosen from the group of multivalent cations that can crosslink polymers such as Al, Fe, B, Ti, Cr and Zr, or organic crosslinkers such as phenol, phenol precursors, polyethylene imines or formaldehyde.

Sulfide scavengers, chemicals that remove all three soluble sulfide species, $H_2S$, $S^{2-}$ and $HS^-$, and form a product that is nonhazardous and noncorrosive, can suitably be an aldehyde or ketone.

Viscoelastic surfactants are materials that exhibit both viscous and elastic characteristics. Viscoelastic surfactants solutions are usually formed by the addition of certain reagents to concentrated solutions of surfactants, frequently consisting of long-chain amphoteric or quaternary ammonium salts such as cetyltrimethyl ammonium bromide. Many common reagents or co-surfactants can be added to generate extra viscosity and stability to the surfactant solutions depending on their iconicity. Salts such as ammonium chloride, potassium chloride, magnesium chloride, sodium salicylate and sodium isocyanate and nonioninc organic molecules such as chloroform can be used. Certain cationic surfactant/anionic surfactant blends with a non-aqueous solvent also form viscoelastic solutions. Salicylic acid or phthalic acid can be used with amphoterics. Individual surfactants that form VES can come from many classes and include cationic surfactants such as erucyl methyl bis(2-hydroxyethyl) ammonium chloride or 4-erucamidopropyl-1,1,1-trimethyl ammonium chloride, gemini and nongemini bis-quarternary and other polycationic surfactants, zwitterionic/amphoteric surfactants, such as betaine surfactants, e.g. oleylamidopropyl betaine or erucylamidopropyl betaine, anionic surfactants, including alkyl taurate anionic surfactants, methyl ester sulfonates and sulfosuccinates, amine oxides and amidoamine oxides, such as dimethylamino propyltallowamide oxide, and ethoxylated fatty amines.

The treatment compositions can be used at basically any temperature encountered when treating a subterranean formation. Though subterranean formations normally have a temperature higher than room temperature, due to the fact that they sometimes are accessed through deep sea water, this means in practice a temperature of between 35 and 400°F (about 2 and 204°C). Preferably, the compositions are used at a temperature where they best achieve the desired effects, which means a temperature of between 77 and 300°F (about 25 and 149°C).

In the process of the invention the composition can be flooded back from the formation. Even more preferably, (part of) the solution is recycled.

It must be realized, however, that GLDA and MGDA, being biodegradable iminodiacetic acids, will not flow back completely and therefore are not recyclable to the full extent.

Examples

Experimental methods

Deionized water with a resistivity of 18.2 MΩ·cm at 25°C was used to dilute the original GLDA solution to a 20 wt% GLDA solution. The original GLDA solution was received from AkzoNobel, and a sample of approximately 300 ml was taken for fluid analysis. The original GLDA fluid had a pH of 3.89, and 37.2 wt% active ingredient expressed as GLDA-NaH$_3$. Hydrochloric acid at 15 wt% was prepared in the same deionized water through dilution of 36.46 wt% HCl, which was obtained from Mallinckrodt Chemical Inc., and 0.5 vol% corrosion inhibitor was added to 15 wt% HCl.

Low permeability Indiana limestone core samples (3.8 cm x 15.24 cm) with an average porosity of 20% and permeability of 5 mD were used. All cores were dried at 93°C for 4 hours, weighed, and then saturated with deionized water to calculate the pore volume and porosity of the cores.

To simulate closed fractured cores, the cylindrical cores were fractured into two halves using an Instron electric compression test machine. The corners of two core halves were covered with silicone rubber and the core surfaces were sealed using Teflon shrinkable tubing to prevent any bypass of the acid around the sides of the core samples. Subsequently, the cores were saturated with deionized water for 12 hours.

The coreflood setup consisted of a syringe pump, a core holder connected to three separate cylinders for supplying acid, deionized water and brine, a pressure transducer measuring the pressure drop across the core, a pump to apply an overburden pressure over the rubber sleeve containing the core sample, a regulator system and a fraction collector. The core holder is a specially designed pressure tapped core holder manufactured by Core Lab Inc. and it allows us to measure the pressure drop along the length of core sample during the test. Besides, the pressure taps can be used to simulate the leak-off conditions in the field.

A profilometer was used to characterize rough fracture surfaces before and after coreflood tests. The vertical measurement was made using a laser displacement sensor, while the sample was moved along its length and width on a moving table. All the experiments used a 0.127 cm measurement interval in the x and y directions. The resolution on the vertical measurement was 0.005 cm; while in the horizontal directions, the transducer resolution was 0.0002 cm.

Once the core samples were well prepared, they were loaded into the core holder and acidized with 20 wt% GLDA and 15 wt% HCl, respectively, with a confining pressure of $105 \times 10^5$ Pa, and a back pressure of $70 \times 10^5$ Pa at 120°C until wormhole breakthrough. The two halves of the fractured core were put together vertically to simulate a vertical fracture that is usually developed in deep formations. Injection rates ranging from 1 $cm^3$/min to 10 $cm^3$/min were applied. The cores were scanned using the profilometer to characterize the rough surfaces before and after the closed fracture acidizing (CFA) tests. The concentrations of the dissolved calcium ions were measured using Inductively Coupled Plasma-Optical Emission Spectroscopy (ICP-OES) and effluent samples were titrated to determine the concentrations of spent acid. The fracture conductivities were measured at closure stresses of $105 \times 10^5$ Pa, $140 \times 10^5$ Pa, $210 \times 10^5$ Pa and $280 \times 10^5$ Pa conditions.

Results

Surface profiles of the fractured cores before and after treatments with 15 wt% HCl or 20 wt% GLDA after reaching wormhole breakthrough showed some remarkable differences.

At injection rates of 1 $cm^3$/min, 2 $cm^3$/min and 10 $cm^3$/min, flow channels with lots of branches were developed across the fracture faces in the cores treated with 15 wt% HCl. Table 1 shows that almost 70% of fracture faces were etched by 15 wt% HCl under these conditions. In successful CFA treatments, well-developed flow channels provide the main fracture conductivity. Branches are beneficial to improve the fracture permeability but substantial branches will significantly increase the acid spending rate and limit the acid penetration depth.

At the lowest injection rate of 1 $cm^3$/min face dissolution was observed, indicative of a too high reaction rate between the rock and the fluid. For HCl, the intermediate injection rate of 5 $cm^3$/min was optimal, as that developed dominant flow channels along the fracture plane. Table 1 shows that 39% of fracture surfaces were affected at 5 $cm^3$/min.

The etching depths of 20 wt% GLDA in Table 1 showed that approximately 50% of the fracture surfaces were affected, irrespective of the injection rate. No face dissolution was observed even at the lowest injection rate of 1 $cm^3$/min. Surface profiles of the cores treated with 20 wt% GLDA showed well-developed flow channels at injection rates of 1 $cm^3$/min and 2 $cm^3$/min. Compared to the optimum injection rate of 15 wt% HCl, larger well-developed flow channels with little branches were created by 20 wt% GLDA.

Table 1: Etching depths of 15 wt% HCl and 20 wt% GLDA after reaching wormhole breakthrough at 120°C as a function of injection rate

| Etching Depth (cm) | Percentage of etching depths (%) with 15 wt% HCl at different injection rate ($cm^3$/min) | | | | | Percentage of etching depths (%) with 20 wt% GLDA at different injection rate ($cm^3$/min) | | | | |
|---|---|---|---|---|---|---|---|---|---|---|
| | 1 | 2 | 5 | 7 | 10 | 1 | 2 | 5 | 7 | 10 |
| 0 | 21 | 23 | 61 | 70 | 31 | 50 | 43 | 50 | 51 | 40 |
| 0-0.0254 | 34 | 9 | 7 | 12 | 25 | 20 | 13 | 28 | 25 | 13 |
| 0.0254-0.0508 | 21 | 14 | 7 | 7 | 13 | 11 | 8 | 13 | 11 | 15 |
| 0.0508-0.0762 | 8 | 14 | 5 | 4 | 10 | 8 | 9 | 4 | 6 | 12 |
| 0.0762-0.1016 | 4 | 16 | 5 | 2 | 3 | 5 | 8 | 2 | 3 | 8 |
| 0.1016-0.127 | 3 | 12 | 4 | 2 | 7 | 2 | 8 | 1 | 1 | 4 |

(continued)

| Etching Depth (cm) | Percentage of etching depths (%) with 15 wt% HCl at different injection rate (cm$^3$/min) | | | | | Percentage of etching depths (%) with 20 wt% GLDA at different injection rate (cm$^3$/min) | | | | |
|---|---|---|---|---|---|---|---|---|---|---|
| | 1 | 2 | 5 | 7 | 10 | 1 | 2 | 5 | 7 | 10 |
| 0.127-0.1524 | 3 | 6 | 3 | 1 | 4 | 1 | 7 | 1 | 1 | 2 |
| 0.1524-0.1778 | 2 | 3 | 2 | 0 | 3 | 1 | 3 | 0 | 1 | 2 |
| 0.1778-0.2032 | 2 | 2 | 2 | 0 | 2 | 0 | 1 | 0 | 0 | 1 |
| 0.2032-0.2286 | 1 | 1 | 2 | 0 | 1 | 1 | 0 | 0 | 0 | 1 |
| 0.2286-0.254 | 1 | 0 | 1 | 0 | 1 | 0 | 0 | 0 | 0 | 1 |
| >0.254 | 1 | 0 | 1 | 0 | 1 | 0 | 0 | 0 | 0 | 1 |
| Total (%) | 100 | 100 | 100 | 100 | 100 | 100 | 100 | 100 | 100 | 100 |

Table 2 compares the pore volumes of 20 wt% GLDA and 15 wt% HCl used to reach wormhole breakthrough (PVbt). 15 wt% HCl propagates faster through the length of the core and reacts faster with carbonate, resulting in a lower PVbt. At lower injection rates, the PVbt of HCl increases due to unwanted face dissolution or washout. GLDA etches a wider part of the fracture surface with much lower reaction rate, resulting in a higher PVbt and a better acid distribution across the entire fracture plane. Increasing the injection rate increases the PVbt, as reaction time between 20 wt% GLDA and carbonate is reduced and more acids are needed for wormhole breakthrough.

Table 2 Pore volume to breakthrough (PVBt) of 15 wt% HCl and 20 wt% GLDA in closed fractured limestones at 120°C as a function of injection rate

| Injection rate (cm$^3$/min) | 15 wt% HCl (PVbt) | 20 wt% GLDA (PVbt) |
|---|---|---|
| 1 | 0.87 | 2.45 |
| 2 | 0.49 | 2.94 |
| 5 | 0.38 | 4.43 |
| 7 | 0.23 | 4.98 |
| 10 | 0.3 | 5.14 |

Table 3 lists the percentage of 15 wt% HCl and 20 wt% GLDA reacted with carbonate after wormhole breakthrough. More than 70% of 15 wt% HCl was spent after it propagates across the 15.24 cm core. Even at optimum injection rate of 5 cm$^3$/min, 89% of 15 wt% HCl was reacted. Well-developed flow channels were created at this flow rate but with limited acid penetration depth. Compared to 15 wt% HCl, much less 20 wt% GLDA was spent after wormhole breakthrough at all injection rates. Surface profiles, etching depths, and spent percentage all indicate that 20 wt% GLDA forms wider flow channels and penetrate much deeper than 15 wt% HCl. Higher injection rate decreases the spent percentage as reaction time between acid and rock is reduced.

Table 3: Spent percentage of 15 wt% HCl and 20 wt% GLDA after reaching wormhole breakthrough at 120°C as a function of injection rate

| Injection rate (cm$^3$/min) | 15 wt% HCl (Spent percentage in %) | 20 wt% GLDA (Spent percentage in %) |
|---|---|---|
| 1 | 94 | 38 |
| 2 | 88 | 44 |
| 5 | 89 | 35 |
| 7 | 70 | 30 |
| 10 | 70 | 27 |

Table 4 shows the fracture conductivity of all cores after wormhole breakthrough at 105x10$^5$ Pa, 140x10$^5$ Pa, 210x10$^5$ Pa and 280x10$^5$ Pa closure stresses. Increasing the closure stress decreases the fracture conductivity as a result of an increased number of contact points between the core faces. Irrespective of injection rates, the decrease in fracture conductivity with 20 wt% GLDA is less than that of 15 wt% HCl. Wider flow channels with little branches achieved with the injection of 20 wt% GLDA contribute to a more stable fracture conductivity.

Table 4: Fracture conductivity at different closure stress conditions after reaching wormhole breakthrough with 15 wt% HCl and 20 wt% GLDA at 120°C as a function of injection rate

| Acid | Injection rate ($cm^3$/min) | Fracture conductivity (md-ft) vs closure stress (Pa) | | | |
|---|---|---|---|---|---|
| | | $105 \times 10^5$ | $140 \times 10^5$ | $210 \times 10^5$ | $280 \times 10^5$ |
| 15 wt% HCl | 1 | 599.69 | 530.97 | 492.78 | 480.90 |
| | 2 | 492.99 | 441.55 | 432.22 | 393.35 |
| | 5 | 480.39 | 460.75 | 441.4 | 431.89 |
| | 7 | 474.22 | 466.37 | 433.68 | 405.50 |
| | 10 | 515.64 | 491.15 | 443.59 | 433.22 |
| 20 wt% GLDA | 1 | 533.30 | 514.55 | 501.99 | 492.37 |
| | 2 | 549.15 | 521.66 | 491.52 | 490.25 |
| | 5 | 503.71 | 495.98 | 476.83 | 466.54 |
| | 7 | 537.55 | 525.77 | 486.01 | 476.98 |
| | 10 | 522.54 | 511.48 | 501.49 | 495.01 |

**Claims**

1. A process for treating fractures that have closed at least partly in a subterranean formation comprising a step of introducing into the formation a treatment composition containing an iminodiacetic acid compound of the formula R-N-$(CH_2$-COOH$)_2$, or a salt thereof, wherein the R-N moiety can be derived from a natural amino acid COOH-CHR'-$NH_2$ that has been carboxymethylated at the nitrogen atom, or wherein the R-N moiety can be derived from an ethylenediamine $NH_2$-$(CH_2$-$CH_2$-NH$)_n$-H that has been at least partly carboxymethylated at the nitrogen atoms.

2. The process of claim 1, wherein the treatment composition contains as the iminodiacetic acid or the salt thereof glutamic acid N,N-diacetic acid or a salt thereof (GLDA), methylglycine N,N-diacetic acid or a salt thereof (MGDA), aspartic acid N,N-diacetic acid or a salt thereof (ASDA) and/or N-hydroxyethyl ethylenediamine N,N',N'-triacetic acid or a salt thereof (HEDTA)

3. The process of claim 1 or 2, wherein the treatment composition has a pH of 2 to 5.

4. The process of any one of claims 1 to 3, wherein the treatment composition contains between 5 and 30 wt% of the iminodiacetic acid or salt thereof based on the total composition weight.

5. The process of any one of claims 2 to 4, wherein the treatment composition contains GLDA.

6. The process of any one of claims 1 to 5, wherein the subterranean formation is a carbonate formation or a carbonate-containing formation.

7. The process of any one of claims 1 to 6, wherein the process contains at least one soaking step.

8. The process of any one of claims 1 to 7, wherein the process is performed at a temperature of between 77 and 400°F (about 25 and 204°C).

9. The process of any one of claims 1 to 8, wherein the treatment composition contains water as a solvent.

10. The process of any one of claims 1 to 9, wherein the treatment composition in addition contains a further additive from the group of anti-sludge agents, surfactants, corrosion inhibitors, mutual solvents, corrosion inhibitor intensifiers, wetting agents, viscosifiers, diverting agents, oxygen scavengers, fluid loss additives, friction reducers, clay stabilizers, rheology modifiers, scale inhibitors, breakers, salts, brines, pH control additives such as further acids and/or bases, bactericides/biocides, particulates, crosslinkers, relative permeability modifiers, sulfide scavengers, fibers, nanoparticles, combinations thereof.

11. The process of claim 10, wherein the surfactant is present in an amount of 0.1 to 2 volume % on total composition volume.

12. The process of claim 10 or 11, wherein the corrosion inhibitor is present in an amount of 0.01 to 2 volume % on total composition volume.

Europäisches
Patentamt

European
Patent Office

Office européen
des brevets

# EUROPEAN SEARCH REPORT

Application Number

EP 15 17 0708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/195290 A1 (AKZO NOBEL CHEMICALS INT BV [NL]) 11 December 2014 (2014-12-11) * page 2 - page 20; claims; examples * | 1-12 | INV. C09K8/68 C09K8/78 C09K8/86 E21B43/26 |
| X | WO 2013/189731 A1 (AKZO NOBEL CHEMICALS INT BV [NL]) 27 December 2013 (2013-12-27) * page 4 - page 20; claims; examples * | 1-12 | |
| X | WO 2012/080463 A1 (AKZO NOBEL CHEMICALS INT BV [NL]; DE WOLF CORNELIA ADRIANA [NL]; NASR-) 21 June 2012 (2012-06-21) * page 4 - page 14 * * page 21 - page 23; claims; examples * | 1-12 | |
| X,D | WO 2012/171858 A1 (AKZO NOBEL CHEMICALS INT BV [NL]; NASR-EL-DIN HISHAM [US]; NASR-EL-DIN) 20 December 2012 (2012-12-20) * page 3 - page 24; claims; examples * | 1-12 | |
| X | WO 2012/080298 A1 (AKZO NOBEL CHEMICALS INT BV [NL]; DE WOLF CORNELIA ADRIANA [NL]; NASR-) 21 June 2012 (2012-06-21) * page 4 - page 20; claims; examples * | 1-12 | TECHNICAL FIELDS SEARCHED (IPC) C09K E21B |
| X | WO 2012/171857 A1 (AKZO NOBEL CHEMICALS INT BV [NL]; NASR-EL-DIN HISHAM [US]; DE WOLF COR) 20 December 2012 (2012-12-20) * page 5 - page 24; claims * | 1-12 | |
| X | US 2012/202720 A1 (DE WOLF CORNELIA ADRIANA [NL] ET AL) 9 August 2012 (2012-08-09) * page 3 - page 4; figures; examples * | 1-10 | |

The present search report has been drawn up for all claims

| Place of search | Date of completion of the search | Examiner |
|---|---|---|
| Munich | 21 August 2015 | Doslik, Natasa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 101 086 A1

## ANNEX TO THE EUROPEAN SEARCH REPORT
## ON EUROPEAN PATENT APPLICATION NO.

EP 15 17 0708

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2015

| Patent document cited in search report | | | Publication date | Patent family member(s) | | Publication date |
|---|---|---|---|---|---|---|
| WO 2014195290 | A1 | | 11-12-2014 | NONE | | |
| WO 2013189731 | A1 | | 27-12-2013 | CA 2875725 A1 | | 27-12-2013 |
| | | | | EP 2861691 A1 | | 22-04-2015 |
| | | | | PH 12014502812 A1 | | 02-03-2015 |
| | | | | US 2015141302 A1 | | 21-05-2015 |
| | | | | WO 2013189731 A1 | | 27-12-2013 |
| WO 2012080463 | A1 | | 21-06-2012 | AU 2011343272 A1 | | 13-06-2013 |
| | | | | CA 2820944 A1 | | 21-06-2012 |
| | | | | CN 103261363 A | | 21-08-2013 |
| | | | | EP 2652076 A1 | | 23-10-2013 |
| | | | | JP 2014504321 A | | 20-02-2014 |
| | | | | NZ 611508 A | | 30-01-2015 |
| | | | | RU 2013131289 A | | 27-01-2015 |
| | | | | SG 190960 A1 | | 31-07-2013 |
| | | | | US 2013264060 A1 | | 10-10-2013 |
| | | | | WO 2012080463 A1 | | 21-06-2012 |
| WO 2012171858 | A1 | | 20-12-2012 | CA 2838297 A1 | | 20-12-2012 |
| | | | | EP 2718392 A1 | | 16-04-2014 |
| | | | | US 2014124205 A1 | | 08-05-2014 |
| | | | | WO 2012171858 A1 | | 20-12-2012 |
| WO 2012080298 | A1 | | 21-06-2012 | AU 2011343384 A1 | | 13-06-2013 |
| | | | | CA 2820920 A1 | | 21-06-2012 |
| | | | | CN 103261362 A | | 21-08-2013 |
| | | | | CO 6731108 A2 | | 15-08-2013 |
| | | | | EP 2652077 A1 | | 23-10-2013 |
| | | | | JP 2014505749 A | | 06-03-2014 |
| | | | | NZ 611512 A | | 24-12-2014 |
| | | | | RU 2013131772 A | | 27-01-2015 |
| | | | | SG 190959 A1 | | 31-07-2013 |
| | | | | US 2013267446 A1 | | 10-10-2013 |
| | | | | WO 2012080298 A1 | | 21-06-2012 |
| WO 2012171857 | A1 | | 20-12-2012 | EP 2718391 A1 | | 16-04-2014 |
| | | | | US 2014116710 A1 | | 01-05-2014 |
| | | | | WO 2012171857 A1 | | 20-12-2012 |
| US 2012202720 | A1 | | 09-08-2012 | AU 2011200525 A1 | | 05-07-2012 |
| | | | | CA 2730812 A1 | | 17-06-2012 |
| | | | | US 2012202720 A1 | | 09-08-2012 |

EPO FORM P0459

For more details about this annex : see Official Journal of the European Patent Office, No. 12/82

17

**EP 3 101 086 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012171858 A
- WO 2008015464 A
- WO 2009086954 A
- WO 2007020592 A
- US 6849581 B